# EUROPEAN PATENT SPECIFICATION

(11) **EP 4 231 377 B1**
(45) Date of publication and mention of the grant of the patent: **08.07.2026**
(21) Application number: 22811697.6
(22) Date of filing: 27.05.2022
(51) Int. Cl.: H01M 10/052, H01M 10/0562, H01M 4/587, H01M 4/36, H01M 4/133, H01M 4/134, H01M 4/62, H01M 4/38

(54) **ALL-SOLID LITHIUM SECONDARY BATTERY AND PREPARATION METHOD THEREOF**
FESTKÖRPER-LITHIUMSEKUNDÄRBATTERIE UND HERSTELLUNGSVERFAHREN DAFÜR
BATTERIE SECONDAIRE AU LITHIUM ENTIÈREMENT SOLIDE ET SON PROCÉDÉ DE PRÉPARATION

(30) Priority: 28.05.2021 KR 20210069415
(43) Date of publication of application: 23.08.2023
(73) Proprietor: LG Energy Solution, Ltd., Seoul 07335 (KR)
(72) Inventor: KIM, Tae Gon, Daejeon 34122 (KR); LEE, Dong Chan, Daejeon 34122 (KR); LEE, Jeong Beom, Daejeon 34122 (KR); KIM, Sul Cham, Daejeon 34122 (KR); KWON, Hye Jin, Daejeon 34122 (KR); HAH, Hoe Jin, Daejeon 34122 (KR); KIM, Ki Tae, Daejeon 34122 (KR); KIM, So Hee, Daejeon 34122 (KR); KIM, Jeong Gil, Daejeon 34122 (KR); KIM, Myeong Soo, Daejeon 34122 (KR)
(74) Representative: Goddar, Heinz J.
(86) International application number: PCT/KR2022/007612
(87) International publication number: WO 2022/250506

(56) References cited:
- EP-B1- 2 711 338
- JP-A- 2020 155 415
- KR-A- 20120 131 398
- KR-A- 20140 073 146
- KR-A- 20200 078 479
- KR-B1- 101 296 373
- US-A1- 2011 223 480
- MERNAGH T P ET AL: "Raman spectra of Graphon carbon black", CARBON, ELSEVIER OXFORD, GB, vol. 22, no. 1, 1 January 1984 (1984-01-01), pages 39 - 42, XP022815016, ISSN: 0008-6223, DOI: 10.1016/0008-6223(84)90130-1

## Description

### TECHNICAL FIELD

The present invention relates to an all-solid lithium secondary battery and a preparation method thereof.

### BACKGROUND ART

Secondary batteries have been mainly applied to the area of small-sized devices such as mobile device and notebook computer, but their application direction has recently been extended to the area of medium and large-sized devices, for example, the area requiring high energy and high output such as energy storage system (ESS) and electric vehicle (EV).

Recently, interest in an all-solid lithium secondary battery tends to increase. The all-solid lithium secondary battery is a secondary battery using a non-flammable inorganic solid electrolyte instead of a liquid electrolyte, wherein the all-solid lithium secondary battery is attracting attention in that it has higher thermal stability than a lithium secondary battery using the liquid electrolyte, has a very low risk of explosion due to leakage during overcharge, and is not required to add equipment for preventing the explosion risk.

However, since the all-solid lithium secondary battery uses a rather bulky solid electrolyte, there are many attempts to improve energy density of the battery. For this purpose, a metal layer capable of forming an alloy with lithium, such as lithium metal, is used as a negative electrode active material layer. However, if the metal layer is used, since pores are generated between the solid electrolyte and the metal layer while lithium precipitated on the metal layer is ionized and dissolved, it adversely affects battery operation. Also, since lithium metal is precipitated as dendrites on a surface of the metal layer during discharge of the all-solid lithium secondary battery, lifetime and safety of the all-solid lithium secondary battery are degraded.

In order to solve such a problem, conventionally, a method of applying a high external pressure by disposing an end plate for preventing the generation of the pores on a positive electrode or negative electrode is also used. However, since a volume of the all-solid lithium secondary battery is excessively increased when the end plate applying the external pressure is used, there is a problem in that the energy density of the all-solid lithium secondary battery is reduced.

Thus, there is a need for a new method capable of improving the lifetime and safety of the all-solid lithium secondary battery.

US 2011/223480 A1 discloses an electrode comprising a decorated nanostructured material including silver nanoparticles bound to the surface of a carbon-based nanostructures such as single-wall carbon nanostructures. The single-wall carbon nanotubes are described as a hollow particle.

EP 2 711 338 B1 discloses a lithium battery comprising an anode including a composite anode active material and a solid electrolyte. The composite anode active material comprises a shell of hollow carbon fiber and a core disposed in the hollow of the hollow carbon fiber. The core comprises a first metal nanostructure alloyable with lithium mixed with a particulate conducting agent. The conducting agent includes silver nanoparticles.

### DISCLOSURE OF THE INVENTION

### TECHNICAL PROBLEM

An aspect of the present invention provides an all-solid lithium secondary battery in which lithium metal may be effectively stored by reducing lithium ions during charge, initial charge/discharge efficiency may be improved, and life characteristics may be improved.

Another aspect of the present invention provides an all-solid lithium secondary battery having price competitiveness by reducing an amount of silver nanoparticles used.

Another aspect of the present invention provides a method of preparing the above-described all-solid lithium secondary battery.

### TECHNICAL SOLUTION

According to an aspect of the present invention, there is provided an all-solid lithium secondary battery including a positive electrode active material layer, a negative electrode active material layer, and a solid electrolyte layer disposed between the positive electrode active material layer and the negative electrode active material layer, wherein the negative electrode active material layer includes a carbon structure and silver nanoparticles, the carbon structure includes at least one hollow-type particle, and the hollow-type particle includes a hollow and a carbonaceous shell surrounding the hollow, wherein the hollow-type particle has an average particle diameter of 5 nm to 100 nm.

According to another aspect of the present invention, there is provided a method of preparing an all-solid lithium secondary battery according to the invention which includes: a first step of forming dry mixed powder including a carbon structure and silver nanoparticles disposed on the carbon structure by reducing silver ions in a mixture of the silver ions and the carbon structure; and a second step of forming a negative electrode active material layer on a negative electrode collector through a negative electrode mixture including the dry mixed powder.

Further embodiments are disclosed in the dependent claims.

### ADVANTAGEOUS EFFECTS

With respect to an all-solid lithium secondary battery according to the present invention, since a negative electrode active material layer includes a carbon structure and silver nanoparticles which are described in the present specification, lithium ions are reduced and precipitated by the negative electrode active material layer during charge, and thus, the lithium ions may be effectively stored in a negative electrode. Also, since the stored lithium may be dissolved in the form of lithium ions during discharge, the lithium ions may move to a positive electrode. The carbon structure may improve initial charge/discharge efficiency and life characteristics of the battery by increasing mobility of the lithium ions. Furthermore, as the carbon structure is used, since the above-described lithium ions may effectively move even with the use of a low amount of the silver nanoparticles, price competitiveness of the all-solid lithium secondary battery prepared may be increased.

### BRIEF DESCRIPTION OF THE DRAWINGS

FIG. 1 is a schematic diagram for explaining an all-solid lithium secondary battery according to an embodiment of the present invention.
FIG. 2 is a schematic diagram for explaining an all-solid lithium secondary battery according to an embodiment of the present invention.
FIG. 3 is a cross-sectional schematic diagram for explaining a hollow particle included in a carbon structure mentioned in the present invention.
FIG. 4 is a cross-sectional schematic diagram for explaining the carbon structure mentioned in the present invention.
FIGS. 5 and 6 are transmission electron microscope (TEM) images of a carbon structure used in Example 1 of the present invention.
FIGS. 7 and 8 are TEM images of a carbon structure used in Example 6 of the present invention.
FIG. 9 is a TEM image of the carbon structure used in Example 1 of the present invention and silver nanoparticles disposed on the carbon structure.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

In the present specification, the expression "specific surface area" is measured by a Brunauer-Emmett-Teller (BET) method, wherein, specifically, the specific surface area may be calculated from a nitrogen gas adsorption amount at a liquid nitrogen temperature (77K) using BELSORP-mini II by Bell Japan Inc.

I_{D}/I_{G} (ratio) may be measured from a wavelength-peak graph during Raman spectrum measurement. Specifically, after fitting the graph by setting a base line so that a D peak and a G peak may be distinguished, the I_{D}/I_{G} may be identified by dividing D peak intensity by G peak intensity (using built-in software, NRS-2000B, Jasco).In the Raman spectrum, a G peak near 1590 cm⁻¹ is due to E_{2g} vibration mode of sp² bonds of carbon, and a D peak near 1350 cm⁻¹ appears when there is a defect in the sp² bonds of carbon.

An average particle diameter of silver nanoparticles in the present specification corresponds to an average value of particle diameters of top 50 silver nanoparticles having a large particle diameter and particle diameters of bottom 50 silver nanoparticles when a prepared carbon structure including the silver nanoparticles or the carbon structure of a negative electrode active material layer is observed at ×1,000,000 magnification with a transmission electron microscope (TEM).

A thickness of a shell in the present specification may be confirmed through a JEM-2100 instrument by JEOL Ltd.

An average particle diameter of hollow-type particles in the present specification corresponds to an average value of particle diameters of top 50 hollow-type particles and particle diameters of bottom 50 hollow-type particles in order of largest particle diameter when the negative electrode active material layer is observed at ×250,000 magnification with a TEM.

Hereinafter, the present invention will be described in detail.

### All-Solid Lithium Secondary Battery

An all-solid lithium secondary battery according to an embodiment of the present invention includes a positive electrode active material layer, a negative electrode active material layer, and a solid electrolyte layer disposed between the positive electrode active material layer and the negative electrode active material layer, wherein the negative electrode active material layer includes a carbon structure and silver nanoparticles, the carbon structure includes at least one hollow-type particle, and the hollow-type particle includes a hollow and a carbonaceous shell surrounding the hollow, wherein the hollow-type particle has an average particle diameter of 5 nm to 100 nm.

### (1) Negative Electrode Active Material Layer

The all-solid lithium secondary battery includes a negative electrode active material layer. Specifically, the all-solid lithium secondary battery may include a negative electrode, and the negative electrode may include a negative electrode collector and a negative electrode active material layer.

The negative electrode collector is not particularly limited so long as it has conductivity without causing adverse chemical changes in the battery. For example, copper, stainless steel, aluminum, nickel, titanium, fired carbon, or aluminum or stainless steel that is surface-treated with one of carbon, nickel, titanium, silver, or the like may be used as the negative electrode collector. Specifically, a transition metal that absorbs carbon well, such as nickel or stainless steel metal, may be used as the negative electrode collector.

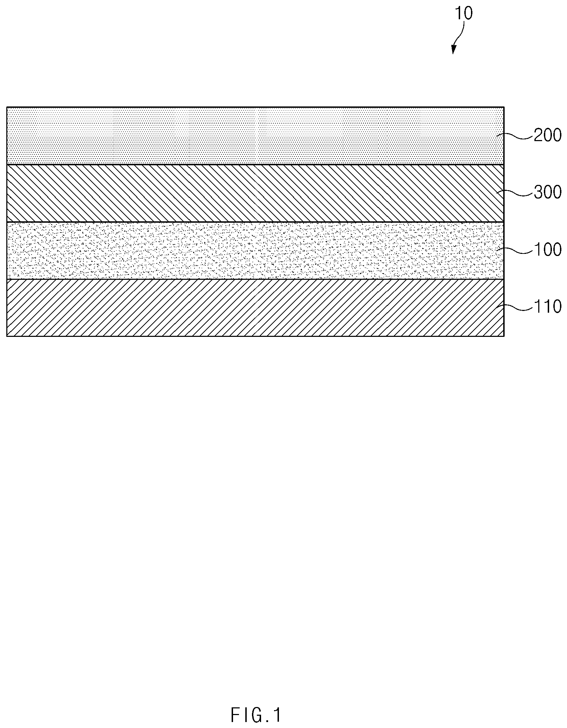

Referring to FIG. 1, the negative electrode active material layer 100 may be disposed on at least one surface of the negative electrode collector 110. Specifically, the negative electrode active material layer 100 may be disposed on one surface of the negative electrode collector 110, or alternatively, may be disposed on both surfaces of the negative electrode collector (not shown).

The negative electrode active material layer includes a carbon structure and silver nanoparticles. Specifically, the negative electrode active material layer may be composed of a carbon structure and silver nanoparticles.

### 1) Carbon Structure

The carbon structure may act as a movement path for lithium ions transferred from the positive electrode active material layer to be easily precipitated and stored on the negative electrode collector.

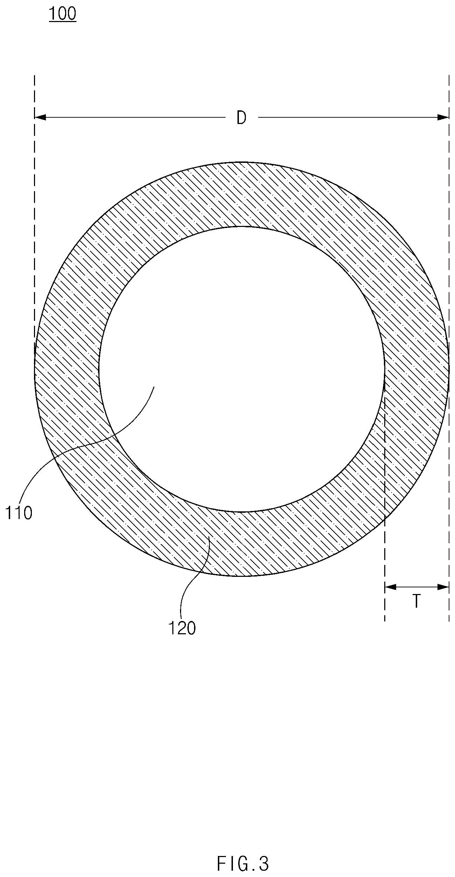

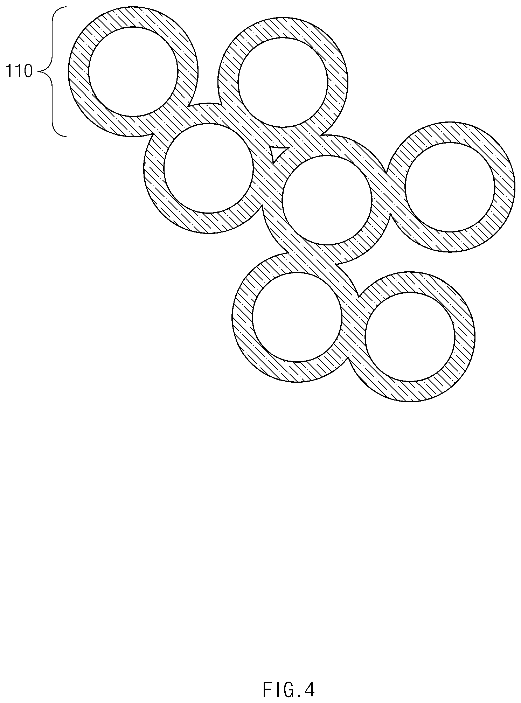

Referring to FIGS. 3 and 4, the carbon structure includes at least one hollow-type particle 100. Specifically, the carbon structure may be composed of one hollow-type particle 100. Alternatively, referring to FIG. 4, the carbon structure may have a secondary particle shape in which a plurality of hollow-type particles 100 are bonded to each other.

Referring to FIG. 3, the hollow-type particle 100 includes a hollow 110 and a carbonaceous shell 120 surrounding the hollow. Specifically, the hollow-type particle 100 has a particle shape, the inside of the hollow-type particle 100 is empty, and an outer surface may surround the empty inside. Herein, the empty inside corresponds to the hollow 110, and the outer surface corresponds to the shell 120. A robust network capable of improving electrical conductivity and ionic conductivity may be formed in the negative electrode active material layer by such a structure. Accordingly, storage and movement of lithium ions may be significantly improved. When described in more detail, with respect to conventional carbon black, since crystallinity of particles is not high due to a spherical primary particle structure having a small radius of curvature, there is a problem in that irreversible capacity for storage and movement of lithium ions in the carbon structure is increased during battery operation. However, in the structure of the hollow-type particle as described above, since the storage and movement of the lithium ions occur intensively in a thin graphite layered structure in the form of a shell and the particle has high crystallinity due to preparation characteristics in which a high-temperature heat treatment is used, initial charge/discharge efficiency and life characteristics of the all-solid lithium secondary battery may be improved.

Referring to FIG. 3, a thickness (T in FIG. 3) of the shell may be in a range of 1 nm to 15 nm, particularly 1 nm to 13 nm, and more particularly 1 nm to 10 nm, for example, 1 nm to 5 nm. When the above thickness range is satisfied, the carbon structure may maintain mechanical rigidity against an external force applied in a preparation process of the negative electrode. Also, the carbon structure may have high electrical conductivity and ionic conductivity due to the developed graphite layered structure. Furthermore, since the storage and movement of the lithium ions may occur intensively in the thin graphite layered structure in the form of a shell, the initial charge/discharge efficiency and life characteristics of the all-solid lithium secondary battery may be improved.

Referring to FIG. 3, an average particle diameter (D in FIG. 3) of the hollow-type particle is in a range of 5 nm to 100 nm, particularly 5 nm to 70 nm, and more particularly 5 nm to 50 nm, for example, 5 nm to 20 nm. When the above average particle diameter range is satisfied, the carbon structure may maintain the mechanical rigidity against the external force applied in the preparation process of the negative electrode. Also, the carbon structure may have high electrical conductivity and ionic conductivity due to the developed graphite layered structure. Furthermore, since the storage and movement of the lithium ions may occur intensively in the thin graphite layered structure in the form of a shell, the initial charge/discharge efficiency and life characteristics of the all-solid lithium secondary battery may be improved.

The carbon structure may have an I_{D}/I_{G} of 0.1 to 1.5, particularly 0.1 to 1.3, and more particularly 0.1 to 1.0, for example, 0.6 to 1.0 during Raman spectrum measurement. In the Raman spectrum, a G peak near 1590 cm⁻¹ is due to E_{2g} vibration mode of sp² bonds of carbon, and a D peak near 1350 cm⁻¹ appears when there is a defect in the sp² bonds of carbon. That is, in a case in which the I_{D}/I_{G} peak ratio is satisfied, it means that a relatively high degree of graphitization may be obtained, and the carbon structure may maintain the mechanical rigidity against the external force applied in the preparation process of the negative electrode. Also, the carbon structure may have high electrical conductivity and ionic conductivity due to the developed graphite layered structure. Furthermore, since the storage and movement of the lithium ions may occur intensively in the thin graphite layered structure in the form of a shell, the initial charge/discharge efficiency and life characteristics of the all-solid lithium secondary battery may be improved.

The carbon structure may have an oxygen content of 5 wt% or less, particularly 0 wt% to 3 wt%, and more particularly 0 wt% to 1 wt% based on a total weight of the carbon structure. In a case in which the oxygen content of the carbon structure satisfies the above range, since the carbon structure has high purity and high crystallinity, the carbon structure may maintain the mechanical rigidity against the external force applied in the preparation process of the negative electrode. Also, the carbon structure may have high electrical conductivity and ionic conductivity due to the developed graphite layered structure. Furthermore, since the storage and movement of the lithium ions may occur intensively in the thin graphite layered structure in the form of a shell, the initial charge/discharge efficiency and life characteristics of the all-solid lithium secondary battery may be improved.

The carbon structure may have a specific surface area (m²/g) measured by a nitrogen adsorption Brunauer-Emmett-Teller (BET)method of 10 m²/g to 300 m²/g, particularly 10 m²/g to 250 m²/g, and more particularly 10 m²/g to 200 m²/g, for example, 80 m²/g to 200 m²/g. In a case in which the above specific surface area range is satisfied, since the silver nanoparticles may be stably disposed on a surface of the carbon structure, the storage and movement of the lithium ions may be effectively made.

The carbon structure may be included in an amount of 50 wt% to 98 wt%, particularly 60 wt% to 95 wt%, and more particularly 70 wt% to 90 wt% in the negative electrode active material layer. When the above range is satisfied, since mobility of the lithium ions may be effectively improved while a decrease in energy density of the all-solid lithium secondary battery is minimized, the initial charge/discharge efficiency and life characteristics of the all-solid lithium secondary battery may be improved.

### 2) Silver Nanoparticle

Since the silver nanoparticle has lithiophilic properties, it may be easily alloyed with lithium ions. Accordingly, the silver nanoparticle may form an alloy with the lithium ions transferred from the positive electrode active material layer to promote the storage and diffusion of the lithium ions into the negative electrode active material layer.

The silver nanoparticle may include silver (Ag). Furthermore, the silver nanoparticle may further include at least one selected from the group consisting of gold, platinum, palladium, silicon, aluminum, bismuth, tin, indium, and zinc. Alternatively, the silver nanoparticle may be formed of silver. The silver nanoparticle may be in a solid phase.

The silver nanoparticle may be disposed on the surface of the carbon structure. Specifically, the silver nanoparticles may be formed by reducing silver ions in a silver ion solution on the surface of the carbon structure, and, accordingly, the silver nanoparticles may be disposed on the surface of the carbon structure. Alternatively, the silver nanoparticles may be disposed on the surface of the carbon structure by mixing powder of silver nanoparticles and the carbon structure in a powder state.

An average particle diameter of the silver nanoparticles may be in a range of 1 nm to 100 nm, particularly 1 nm to 50 nm, and more particularly 1 nm to 30 nm, for example, 1 nm to 5 nm. When the above range is satisfied, since the silver nanoparticles may be effectively dispersed in the negative electrode active material layer, the storage and diffusion of the lithium ions may be facilitated even if an amount of the silver nanoparticles is low. In addition, initial efficiency and life characteristics of the battery may be improved.

In the negative electrode active material layer, the silver nanoparticles may be included in an amount of 1 wt% to 40 wt% based on a total weight of the carbon structure and the silver nanoparticles, and may be specifically included in an amount of 3 wt% to 30 wt%, more specifically, 5 wt% to 20 wt%, for example, 7 wt% to 10 wt%. When the above range is satisfied, since the lithium ions transferred from the positive electrode active material layer may be effectively alloyed with the silver nanoparticles, electrochemical properties of the all-solid lithium secondary battery may be improved. Also, since the silver nanoparticles with a rather low silver content are used, the energy density and price competitiveness of the all-solid lithium secondary battery may be improved.

Particularly, that the silver nanoparticles may be used in an amount of 10 wt% or less, specifically, 7 wt% to 10 wt% is because the negative electrode active material layer includes the carbon structure. The lithium ions are alloyed with the silver nanoparticles having lithiophilic properties to promote the storage and diffusion of the lithium ions into the negative electrode, wherein, if the carbon structure described in the present invention is particularly used, the diffusion and movement of the lithium ions may be further promoted through the thin and highly crystalline graphite layered structure in the form of a shell. Capacity and initial charge/discharge efficiency of the all-solid lithium secondary battery may be sufficiently improved even with a small amount of the silver nanoparticles.

In the negative electrode active material layer, a weight ratio of the carbon structure to the silver nanoparticles may be in a range of 99:1 to 60:40, particularly 97:3 to 70:30, and more particularly 95:5 to 80:20. When the above range is satisfied, the capacity and initial charge/discharge efficiency of the all-solid lithium secondary battery may be more effectively improved.

A loading amount of the negative electrode active material layer may be in a range of 0.1 mg/cm² to 2.0 mg/cm², particularly 0.3 mg/cm² to 1.8 mg/cm², and more particularly 0.5 mg/cm² to 1.6 mg/cm². When the above range is satisfied, an effect of improving the initial efficiency and lifetime of the battery may be maximized without reducing the energy density due to an increase in thickness of the negative electrode.

A thickness of the negative electrode active material layer may be in a range of 1 µm to 100 µm, particularly 1 µm to 50 µm, and more particularly 1 µm to 20 µm. When the above range is satisfied, the effect of improving the initial efficiency and lifetime of the battery may be maximized without reducing the energy density due to the increase in the thickness of the negative electrode.

### 3) Negative Electrode Binder

The negative electrode active material layer may further include a negative electrode binder. The negative electrode binder may include at least one selected from the group consisting of polyvinylidene fluoride (PVdF), polyvinyl alcohol (PVA), carboxymethyl cellulose (CMC), starch, hydroxypropyl cellulose, polyvinylpyrrolidone, polytetrafluoroethylene (PTFE), polyethylene, polypropylene, an ethylene-propylene-diene monomer (EPDM), a styrene-butadiene rubber (SBR), and a fluoro rubber.

The negative electrode binder may be included in an amount of 1 wt% to20 wt%, particularly 1 wt% to 15 wt%, and more particularly 1 wt% to 10 wt% in the negative electrode active material layer. In a case in which the above range is satisfied, mechanical properties of the negative electrode may be improved while resistance of the negative electrode is maintained at a low level, and the storage and diffusion of the lithium ions may be further promoted.

In some cases, the negative electrode active material layer may further include at least one of lithium ion, lithium, and an alloy of lithium and silver nanoparticle. Specifically, if the all-solid lithium secondary battery is operated, at least one of lithium ion, lithium, and an alloy of lithium and silver nanoparticle may be present in the negative electrode active material layer by the lithium ions transferred from the positive electrode active material layer.

### (2) Positive Electrode Active Material Layer

The all-solid lithium secondary battery may include a positive electrode active material layer. Specifically, the all-solid lithium secondary battery may include a positive electrode, and the positive electrode may include a positive electrode active material layer or may be composed of the positive electrode active material layer.

The positive electrode may include a positive electrode collector. The positive electrode collector is not particularly limited as long as it has high conductivity without causing adverse chemical changes in the positive electrode or the battery, and the positive electrode collector, for example, may include at least one selected from the group consisting of stainless steel, copper, aluminum, nickel, titanium, and fired carbon, and may specifically include aluminum. The positive electrode collector includes a carbon-based conductive agent and a binder, and may further include a primer layer which is coated on a surface of the positive electrode collector. Accordingly, electrical conductivity and a binding force between the positive electrode active material layer and the current collector may be significantly improved.

The positive electrode active material layer may be disposed on at least one surface of the positive electrode collector. Specifically, the positive electrode active material layer may be disposed on one surface or both surfaces of the positive electrode collector.

The positive electrode active material layer may include a positive electrode active material.

The positive electrode active material may include a layered compound, such as lithium cobalt oxide (LiCoO₂) or lithium nickel oxide (LiNiO₂), or a compound substituted with one or more transition metals; lithium manganese oxides including Li₁₊ₓMn₂₋ₓO₄ (where, x is 0 to 0.33), LiMnO₃, LiMn₂O₃, LiMn₂O₄, and LiMnO₂; lithium copper oxide (Li₂CuO₂); vanadium oxides such as LiV₃O₈, LiV₃O₄,V₂O₅, and Cu₂V₂O₇; nickel (Ni)-site type lithium nickel oxide expressed by a chemical formula of LiNi₁₋ₓMₓO₂ (where, M = cobalt (Co), manganese (Mn), aluminum (Al), copper (Cu), iron (Fe), phosphorus (P), magnesium (Mg), calcium (Ca), zirconium (Zr), titanium (Ti), ruthenium (Ru), niobium (Nb), tungsten (W),boron (B), silicon (Si), sodium (Na), potassium (K), molybdenum (Mo), vanadium (V), or gallium (Ga), and x= 0.01 to 0.3); lithium manganese composite oxide expressed by a chemical formula of LiMn₁₋ₓMₓO₂ (where, M = Co, nickel (Ni), Fe, chromium (Cr), zinc (Zn), or tantalum (Ta), and x =0.01 to 0.1) or Li₂Mn₃MO₈ (where, M =Fe, Co, Ni, Cu, or Zn);spinel structure lithium manganese composite oxides expressed by LiNiₓMn₂₋ₓO₄; LiMn₂O₄ having a part of lithium (Li) being substituted with alkaline earth metal ions; a disulfide compound; LiMnₓFe₁₋ₓPO₄(0≤x≤0.9);or Fe₂(MoO₄)₃. However, the positive electrode active material is not limited thereto.

The positive electrode active material may include Li₁₊ₓM_{y}O_{2+z}, wherein M may be at least one element selected from the group consisting of Ni, Co, Mn, Fe, P, Al, Mg, Ca, Zr, Zn, Ti, Ru, Nb, W, B, Si, Na, K, Mo, and V, and 0≤x≤5, 0<y≤2, and 0≤z≤2. Specifically, Li₁₊ₓM_{y}O_{2+z} may include at least one selected from the group consisting of LiCoO₂, LiNiO₂, LiMnO₂, Li[Ni_{0.5}Co_{0.3}Mn_{0.2}]O₂, Li[Ni_{0.6}Co_{0.2}Mn_{0.2}]O₂, Li [Ni_{0.7}Co_{0.1}Mn_{0.2}]O₂, Li[Ni_{0.8}Co_{0.1}Mn_{0.1}]O₂, Li[Ni_{0.9}Co_{0.05}Mn_{0.05}]O₂, LiMn₂O₄, LiFePO₄, and 0.5Li₂MnO₃·0.5Li[Mn_{0.4}Ni_{0.3}Co_{0.3}]O₂. Preferably, Li₁₊ₓM_{y}O_{2+z} may include any one of Li[Ni_{0.6}Co_{0.2}Mn_{0.2}]O₂, Li [Ni_{0.7}Co_{0.1}Mn_{0.2}]O₂, Li[Ni_{0.8}Co_{0.1}Mn_{0.1}]O₂, and Li[Ni_{0.9}Co_{0.05}Mn_{0.05}]O₂. Since the positive electrode active material includes Li₁₊ₓM_{y}O_{2+z}, lithium may be sufficiently supplied to the negative electrode, and, since Li₁₊ₓM_{y}O_{2+z} exhibits electrochemical activity after the first cycle without causing degradation of overall battery performance, a battery capacity loss due to irreversible capacity of the negative electrode may be prevented. The Li₁₊ₓM_{y}O_{2+z} may be in the form of a secondary particle which is formed by bonding or assembling primary particles, or, alternatively, may be in the form of a single particle.

The positive electrode active material may be included in an amount of 50 wt% to 95 wt%, specifically, 60 wt% to 90 wt% in the positive electrode active material layer.

The positive electrode active material layer may further include a solid electrolyte.

The solid electrolyte may specifically include at least one selected from the group consisting of a polymer solid electrolyte, an oxide-based solid electrolyte, a sulfide-based solid electrolyte, and a halide-based solid electrolyte.

The polymer solid electrolyte may be a composite of a lithium salt and a polymer resin. Specifically, the polymer solid electrolyte may be formed by adding a polymer resin to a solvated lithium salt. Specifically, ionic conductivity of the polymer solid electrolyte may be in a range of about 1×10⁻⁷ S/cm or more, preferably, about 1×10⁻³ S/cm or more.

The polymer resin includes a polyether-based polymer, a polycarbonate-based polymer, an acrylate-based polymer, a polysiloxane-based polymer, a phosphazene-based polymer, a polyethylene derivative, an alkylene oxide derivative such as polyethylene oxide, a phosphoric acid ester polymer, a poly agitation lysine, a polyester sulfide, polyvinyl alcohol, polyvinylidene fluoride, or a polymer containing an ionic dissociation group, and may include one or more thereof. Also, the polymer solid electrolyte is a polymer resin, wherein examples thereof may be a branched copolymer obtained by copolymerizing an amorphous polymer, such as PMMA, polycarbonate, polysiloxane (pdms), and/or phosphazene, as a comonomer in a PEO (polyethylene oxide) main chain, a comb-like polymer resin, and a cross-linked polymer resin, and at least one thereof may be included.

The lithium salt is ionizable, wherein it may be expressed as Li⁺X⁻. An anion of the lithium salt is not particularly limited, but examples thereof may be F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The oxide-based solid electrolyte may include oxygen (O) and may have ion conductivity of a metal belonging to Group 1 or Group 2 of the periodic table. As a non-limiting example thereof, at least one selected from a LLTO-based compound, Li₆La₂CaTa₂O₁₂, Li₆La₂ANb₂O₁₂ (A is Ca or strontium (Sr)), Li₂Nd₃TeSbO₁₂, Li₃BO_{2.5}N_{0.5}, Li₉SiAlO₈, a LAGP-based compound, a LATP-based compound, Li₁₊ₓTi₂₋ₓAlₓSi_{y}(PO₄)_{3-y}(where, 0≤x≤1, 0≤y≤ 1), LiAlₓZr₂₋ₓ(PO₄)₃(where, 0≤x≤1, 0≤y≤1), LiTiₓZr₂₋ₓ(PO₄)₃(where, 0≤x≤1, 0≤y≤1), a LISICON-based compound, a LIPON-based compound, a perovskite-based compound, a NASICON-based compound, and a LLZO-based compound may be included. However, the oxide-based solid electrolyte is not particularly limited thereto.

The sulfide-based solid electrolyte contains sulfur (S) and has ion conductivity of a metal belonging to Group 1 or Group 2 of the periodic table, wherein the sulfide-based solid electrolyte may include Li-P-S-based glass or Li-P-S-based glass ceramic. Non-limiting examples of the sulfide-based solid electrolyte may be Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, and Li₂S-GeS₂-ZnS, and the sulfide-based solid electrolyte may include at least one thereof. However, the sulfide-based solid electrolyte is not particularly limited thereto.

The halide-based solid electrolyte may include at least one of Li₃YCl₆ and Li₃YBr₆, but is not particularly limited thereto.

The solid electrolyte may be included in an amount of 5 wt% to 50 wt%, specifically, 10 wt% to 30 wt% in the positive electrode active material layer.

The positive electrode active material layer may further include a positive electrode conductive agent.

The positive electrode conductive agent is not particularly limited as long as it has conductivity without causing adverse chemical changes in the positive electrode or the battery, and, for example, the positive electrode conductive agent may include one selected from conductive materials such as: graphite such as natural graphite or artificial graphite; carbon black such as carbon black, acetylene black, Ketjen black, channel black, furnace black, lamp black, and thermal black; graphene; conductive fibers such as carbon nanofibers and carbon nanotubes; fluorocarbon; metal powder such as aluminum powder and nickel powder; conductive whiskers such as zinc oxide whiskers and potassium titanate whiskers; conductive metal oxide such as titanium oxide; and polyphenylene derivatives, or a mixture of two or more thereof.

The positive electrode conductive agent may be included in an amount of 1 wt% to 30 wt% in the positive electrode active material layer.

The positive electrode active material layer may further include a positive electrode binder.

The positive electrode binder is not particularly limited as long as it a component that assists in the binding between the positive electrode active material and the conductive agent and in the binding with the current collector, and may specifically include at least one selected from the group consisting of polyvinylidene fluoride (PVdF), polyvinyl alcohol (PVA), carboxymethyl cellulose (CMC), starch, hydroxypropyl cellulose, polyvinylpyrrolidone, polytetrafluoroethylene (PTFE), polyethylene, polypropylene, an ethylene-propylene-diene monomer (EPDM), a styrene-butadiene rubber (SBR), and a fluoro rubber.

The positive electrode binder may be included in an amount of 1 wt% to 30 wt% in the positive electrode active material layer.

The positive active material layer may include at least one additive such as an oxidation stabilizing additive, a reduction stabilizing additive, a flame retardant, a thermal stabilizer, and an antifogging agent, if necessary.

### (3) Solid Electrolyte Layer

The all-solid lithium secondary battery may include a solid electrolyte layer.

The solid electrolyte layer may play an insulating role and may function as an ion conductive channel in the all-solid lithium secondary battery.

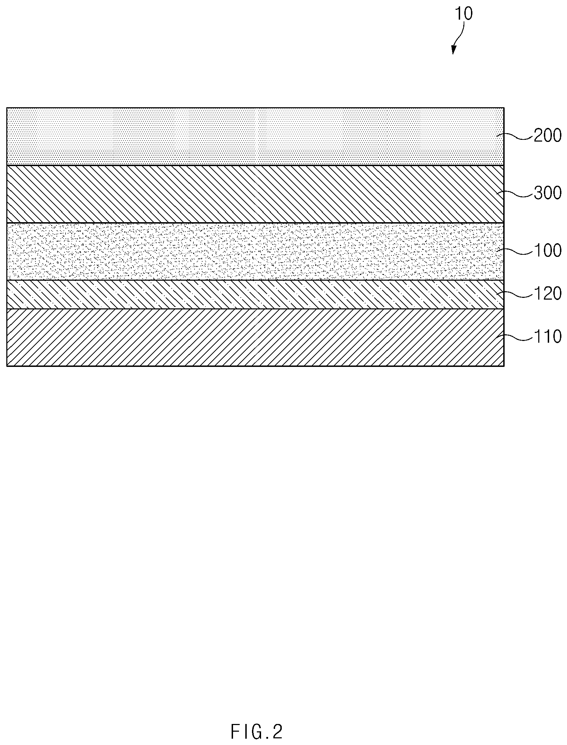

Referring to FIG. 2, the solid electrolyte layer 300 may be disposed between the negative electrode active material layer 100 and the positive electrode active material layer 200.

The solid electrolyte layer 300 includes the solid electrolyte. The solid electrolyte may specifically include at least one selected from the group consisting of a polymer solid electrolyte, an oxide-based solid electrolyte, and a sulfide-based solid electrolyte.

The polymer solid electrolyte may be a composite of a lithium salt and a polymer resin. Specifically, the polymer solid electrolyte may be formed by adding a polymer resin to a solvated lithium salt. Specifically, ionic conductivity of the polymer solid electrolyte may be in a range of about 1×10⁻⁷ S/cm or more, preferably, about 1×10⁻³ S/cm or more.

The polymer resin includes a polyether-based polymer, a polycarbonate-based polymer, an acrylate-based polymer, a polysiloxane-based polymer, a phosphazene-based polymer, a polyethylene derivative, an alkylene oxide derivative such as polyethylene oxide, a phosphoric acid ester polymer, a poly agitation lysine, a polyester sulfide, polyvinyl alcohol, polyvinylidene fluoride, or a polymer containing an ionic dissociation group, and may include one or more thereof. Also, the polymer solid electrolyte is a polymer resin, wherein examples thereof may be a branched copolymer obtained by copolymerizing an amorphous polymer, such as PMMA, polycarbonate, polysiloxane (pdms), and/or phosphazene, as a comonomer in a PEO (polyethylene oxide) main chain, a comb-like polymer resin, and a cross-linked polymer resin, and at least one thereof may be included.

The lithium salt is ionizable, wherein it may be expressed as Li⁺X⁻. An anion of the lithium salt is not particularly limited, but examples thereof may be F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The oxide-based solid electrolyte may include oxygen (O) and may have ion conductivity of a metal belonging to Group 1 or Group 2 of the periodic table. As a non-limiting example thereof, at least one selected from a LLTO-based compound, Li₆La₂CaTa₂O₁₂, Li₆La₂ANb₂O₁₂(A is Ca or Sr), Li₂Nd₃TeSbO₁₂, Li₃BO_{2.5}N_{0.5}, Li₉SiAlO₈,a LAGP-based compound, a LATP-based compound, Li₁₊ₓTi₂₋ₓAlₓSi_{y}(PO₄)₃₋₇(where, 0≤x≤1, 0≤y≤1), LiAlₓZr₂₋ₓ(PO₄)₃(where, 0≤x≤1, 0≤y≤1), LiTiₓZr₂₋ₓ(PO₄)₃(where, 0≤x≤1, 0≤ y≤1), a LISICON-based compound, a LIPON-based compound, a perovskite-based compound, a NASICON-based compound, and a LLZO-based compound may be included. However, the oxide-based solid electrolyte is not particularly limited thereto.

The sulfide-based solid electrolyte contains sulfur (S) and has ion conductivity of a metal belonging to Group 1 or Group 2 of the periodic table, wherein the sulfide-based solid electrolyte may include Li-P-S-based glass or Li-P-S-based glass ceramic. Non-limiting examples of the sulfide-based solid electrolyte may be Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, and Li₂S-GeS₂-ZnS, and the sulfide-based solid electrolyte may include at least one thereof. However, the sulfide-based solid electrolyte is not particularly limited thereto.

The solid electrolyte layer may further include a binder for a solid electrolyte layer. The binder for a solid electrolyte layer may be introduced for binding between the solid electrolytes and binding between the solid electrolyte layer and battery elements (e.g., positive electrode, negative electrode, etc.) stacked on both surfaces thereof.

A material of the binder for a solid electrolyte layer is not particularly limited and may be appropriately selected within a range of components used as a binder of the solid electrolyte in the all-solid lithium secondary battery. Specifically, the binder for a solid electrolyte layer may include at least one selected from the group consisting of polyvinylidene fluoride (PVdF), polyvinyl alcohol (PVA), carboxymethyl cellulose (CMC), starch, hydroxypropyl cellulose, polyvinylpyrrolidone, polytetrafluoroethylene, polyethylene, polypropylene, an ethylene-propylene-diene monomer (EPDM), a styrene-butadiene rubber (SBR), a styrene-butadiene styrene block copolymer (SBS), a nitrile butadiene rubber (NBR),a fluoro rubber, and an acrylic binder.

A thickness of the solid electrolyte layer may be in a range of 10 µm to 90 µm, specifically, 20 µm to 80 µm, in consideration of ionic conductivity, physical strength, and energy density of a battery using the solid electrolyte layer. Also, tensile strength of the solid electrolyte layer may be in a range of 500kgf/cm² to 2,000kgf/cm². Furthermore, porosity of the solid electrolyte layer 300 may be 15% or less or about 10% or less.

The all-solid lithium secondary battery may further include a metal layer. Referring to FIG. 2, the all-solid lithium secondary battery 10 further includes a negative electrode collector 110, and may further include a metal layer 120 disposed between the negative electrode active material layer 100 and the negative electrode collector 110 in a charged state. The metal layer 120 may include lithium, and may specifically be formed of lithium.

The metal layer may mean a layer which is formed by storing the lithium ions transferred from the positive electrode active material layer on the negative electrode collector and the negative electrode active material layer through the negative electrode active material layer when the all-solid lithium secondary battery is charged. Thus, the metal layer appears clearly during charge.

The metal layer is observed during a discharge process, but, theoretically, may not be observed during complete discharge.

The present invention is meaningful in an all-solid lithium secondary battery, and may not have much meaning in a lithium secondary battery using a liquid electrolyte. For example, if the liquid electrolyte is used, since lithium (e.g., in the form of a metal layer) stored in the negative electrode may be continuously exposed to the liquid electrolyte, it may be difficult to completely store the lithium in the negative electrode.

### Method of Preparing All-Solid Lithium Secondary Battery

A method of preparing an all-solid lithium secondary battery according to another embodiment of the present invention includes: a first step of forming dry mixed powder including a carbon structure and silver nanoparticles disposed on the carbon structure by reducing silver ions in a mixture of the silver ions and the carbon structure; and a second step of forming a negative electrode active material layer on a negative electrode collector through a negative electrode slurry including the dry mixed powder. Herein, the all-solid lithium secondary battery may be the same as the all-solid lithium secondary battery of the above-described embodiment. Also, the negative electrode active material layer may be the same as the negative electrode active material layer of the above-described embodiment.

### (1) First Step

In the first step, dry mixed powder including the carbon structure and silver nanoparticles disposed on the carbon structure is formed. The dry mixed powder may be prepared by mixing silver nanoparticles in the form of powder and a carbon structure in the form of powder. Alternatively, the dry mixed powder may also be prepared by mixing a carbon structure in a silver ion solution and then reducing silver nanoions. As a method of reducing the silver nanoparticles, there are various methods such as a chemical reduction method, an electrochemical reduction method, a photochemical reduction method, a laser reduction method, an ultrasonic reduction method, and sputtering, but, preferably, a chemical reduction method using a polyol process or a microwave-assisted polyol method using microwave may be used.

In the polyol process, the silver ion solution may include a solvent and a stabilizer in addition to the silver ions. Ethylene glycol may be used as the solvent, and polyvinylpyrrolidone may be used as the stabilizer. However, the present invention is not necessarily limited thereto.

A molar concentration of the silver ions in the silver ion solution may be in a range of 1 mM to 1,000 mM, particularly 1 mM to 500 mM, and more particularly 1 mM to 300 mM. When the above molar concentration range is satisfied, since amount and size of the silver nanoparticles formed may be adjusted to an appropriate level, capacity, initial charge/discharge efficiency, and life characteristics of the all-solid lithium secondary battery may be effectively controlled.

In the first step, the reducing of the silver ions may include reacting the mixed solution at 100°C to 500°C, and may specifically include reacting at 100°C to 300°C. That is, the mixed solution may be reacted by performing a heat treatment at the above-described temperature. Accordingly, the silver ions may be appropriately reduced to obtain silver nanoparticles having a desirable size. Also, the silver nanoparticles may be disposed on a surface of the carbon structure in the above process.

The reducing of the silver ions may include adjusting a pH of the mixed solution. Specifically, the mixed solution may be adjusted to have an acidity of pH 8 to pH 14, more specifically, pH 9 to pH 13.Accordingly, the silver ions may be appropriately reduced to obtain silver nanoparticles having a desirable size.

Thereafter, the dry mixed powder may be obtained by washing and then drying a solid content of the mixed solution.

In the dry mixed powder, a weight ratio of the carbon structure to the silver nanoparticles may be in a range of 99:1 to 60:40, particularly 97:3 to 70:30, and more particularly 95:5 to 80:20. When the above range is satisfied, the capacity and initial charge/discharge efficiency of the all-solid lithium secondary battery may be more effectively improved.

### (2) Second Step

In the second step, a negative electrode active material layer is formed on a negative electrode collector through a negative electrode slurry including the dry mixed powder. The negative electrode slurry may include the dry mixed powder and a solvent for a negative electrode slurry.

The solvent for a negative electrode slurry may be selected from the group consisting of water and N-methyl pyrrolidone, but is not necessarily limited thereto.

The negative electrode slurry may further include a negative electrode binder. The negative electrode binder may be the same as the negative electrode binder of the above-described embodiment.

In the second step, the negative electrode active material layer may be formed by coating and drying the negative electrode slurry on the negative electrode collector. In some cases, in addition to the coating and drying processes, a pressurizing process may be added.

The method of preparing an all-solid lithium secondary battery may further include forming the carbon structure, before the first step.

The forming of the carbon structure includes preparing preliminary particles; and modifying the preliminary particles by a high-temperature heat treatment, wherein the modifying of the preliminary particles by the high-temperature heat treatment may include at least one of a) performing a long-time heat treatment of the preliminary particles at a temperature of 1,600°C to 2,000°C in an inert atmosphere; and b) performing a short-time heat treatment at a temperature of greater than 2,000°C.

In the preparing of the preliminary particles, the preliminary particles may be carbon black. Specifically, the preliminary particles may be at least one selected from the group consisting of acetylene black, furnace black, thermal black, channel black, and lamp black. More specifically, the preliminary particles may be acetylene black which is produced at the highest temperature to basically have an excellent degree of graphitization.

The preparing of the preliminary particles may include pyrolysis of acetylene gas, and carbon black, for example, acetylene black may be formed by the pyrolysis. The acetylene gas may be high purity acetylene gas, and may specifically be acetylene gas with a purity of 95% or more, for example, 98% or more.

The pyrolysis of the acetylene gas may be performed at a temperature of 1,500°C or more, particularly 1,500°C to 2,200°C, and more particularly 1,500°C to 2,000°C. In a case in which the temperature satisfies the above range, a degree of graphitization of the prepared preliminary particles may be high, and a degree of graphitization of the secondary particle thus prepared may also be high. Thus, the electrical conductivity of the conductive agent may be improved.

The pyrolysis may be performed in such a manner that, after an internal temperature of a reaction furnace is adjusted to the above temperature range, acetylene gas is introduced into the reaction furnace and the pyrolysis is instantaneously performed. In the process, air, oxygen, and H₂O may be further added.

The modifying of the preliminary particles by the high-temperature heat treatment may be performed by controlling reaction temperature and time in the reaction furnace containing the preliminary particles. In this case, an inert atmosphere in the reaction furnace may be formed with vacuum or any one gas selected from the group consisting of helium, argon, and nitrogen. The high-temperature heat treatment may include at least one of a) performing a long-time heat treatment of the preliminary particles at a temperature of 1,600°C to 2,000°C in an inert atmosphere; and b) performing a short-time heat treatment at a temperature of greater than 2,000°C. The high-temperature heat treatment time may be in a range of 10 minutes to 50 hours.

Also, provided is a battery module including the all-solid lithium secondary battery as a unit cell, a battery pack including the battery module, and a device including the battery pack as a power source. In this case, specific examples of the device may be a power tool that is operated by being powered by an electric motor; electric cars including an electric vehicle (EV), a hybrid electric vehicle (HEV), and a plug-in hybrid electric vehicle (PHEV); electric two-wheeled vehicles including an electric bicycle (E-bike) and an electric scooter (E-scooter); an electric golf cart; urban air mobility (UAM); and a power storage system, but the device is not limited thereto.

Hereinafter, the present invention will be described in more detail, according to examples.

### Examples and Comparative Examples

### Preparation Example 1: Formation of Carbon Structure

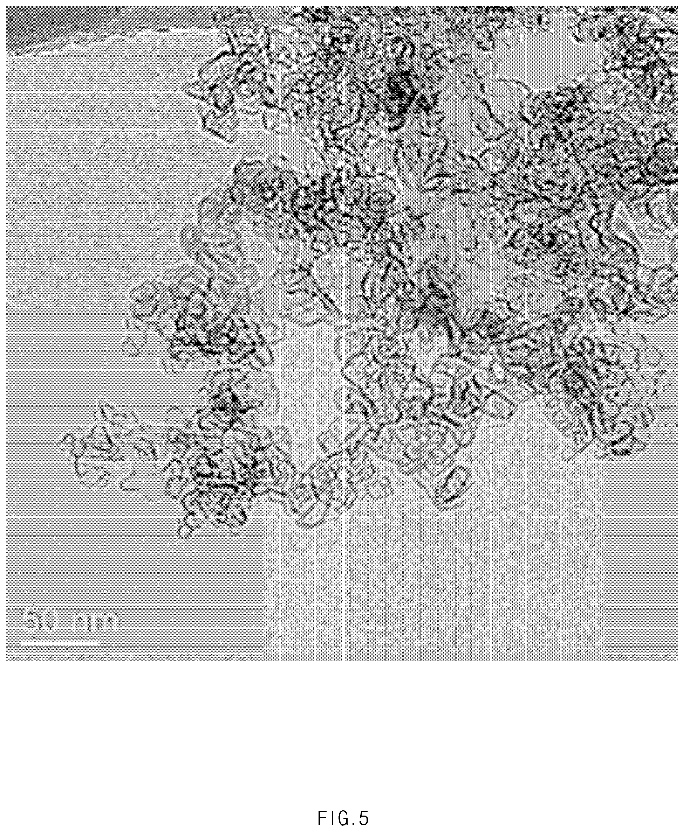

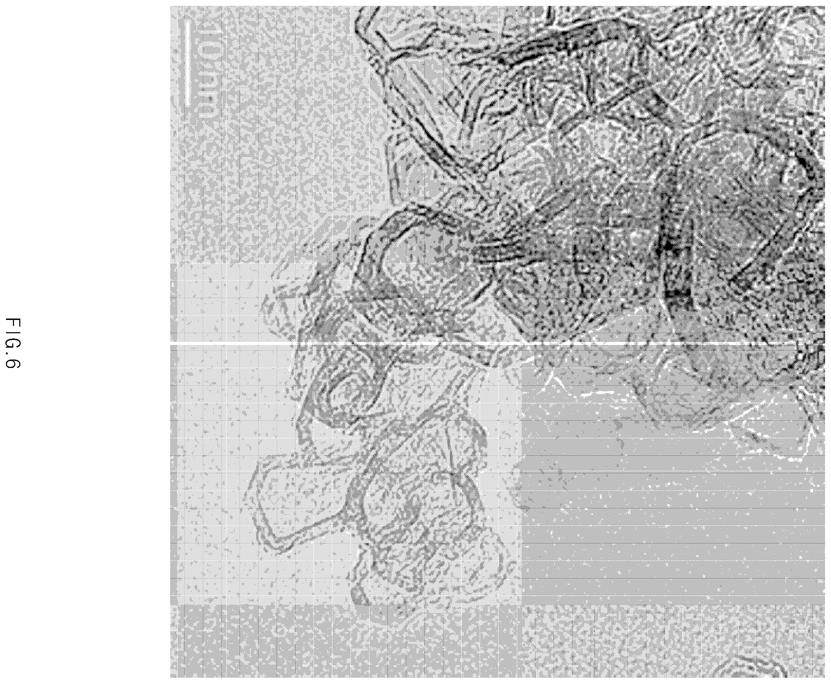

Acetylene black was heat-treated at 2,800°C for 6 hours in an argon (Ar) atmosphere to prepare a carbon structure of Preparation Example 1 in which hollow-type particles were connected to each other to have a secondary particle structure. In the carbon structure, a plurality of hollow-type particles were bonded to each other to exhibit the secondary particle structure, and the hollow-type particle included a hollow and a carbonaceous shell surrounding the hollow. (See FIGS. 5 and 6).

### Preparation Example 2: Preparation of Carbon Structure

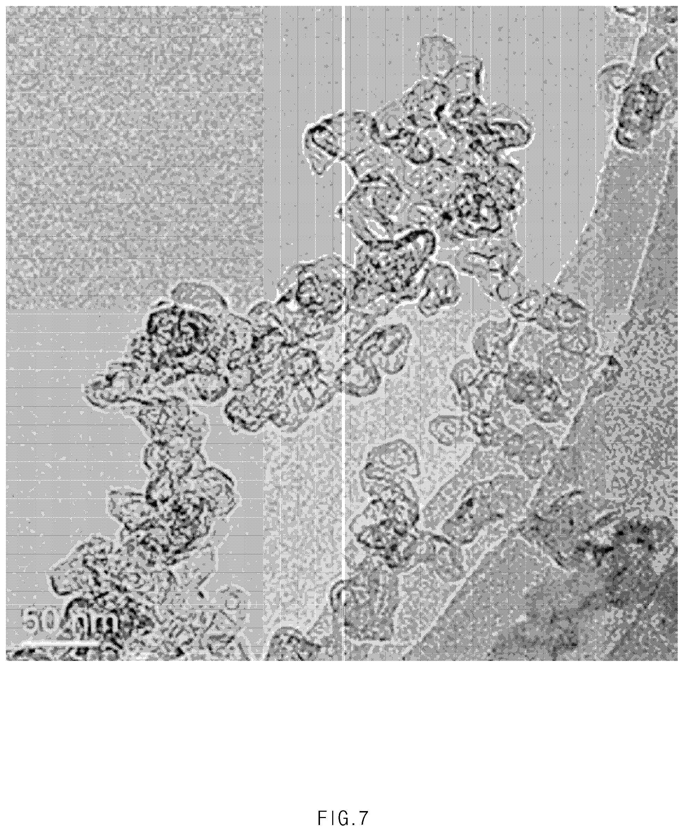

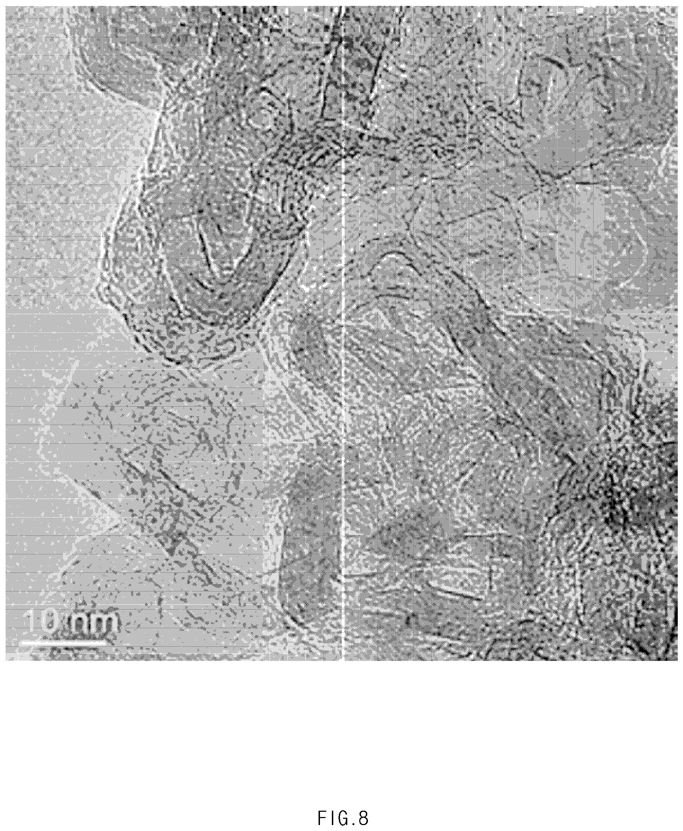

Acetylene black having a larger particle diameter than the acetylene black used in Preparation Example 1 was heat-treated at 2,800°C for 6 hours in an Ar atmosphere to prepare a carbon structure of Preparation Example 2 in which hollow-type particles were connected to each other to have a secondary particle structure. In the carbon structure, a plurality of hollow-type particles were bonded to each other to exhibit the secondary particle structure, and the hollow-type particle included a hollow and a carbonaceous shell surrounding the hollow. (See FIGS. 7 and 8).

### Example 1: Preparation of All-Solid Lithium Secondary Battery

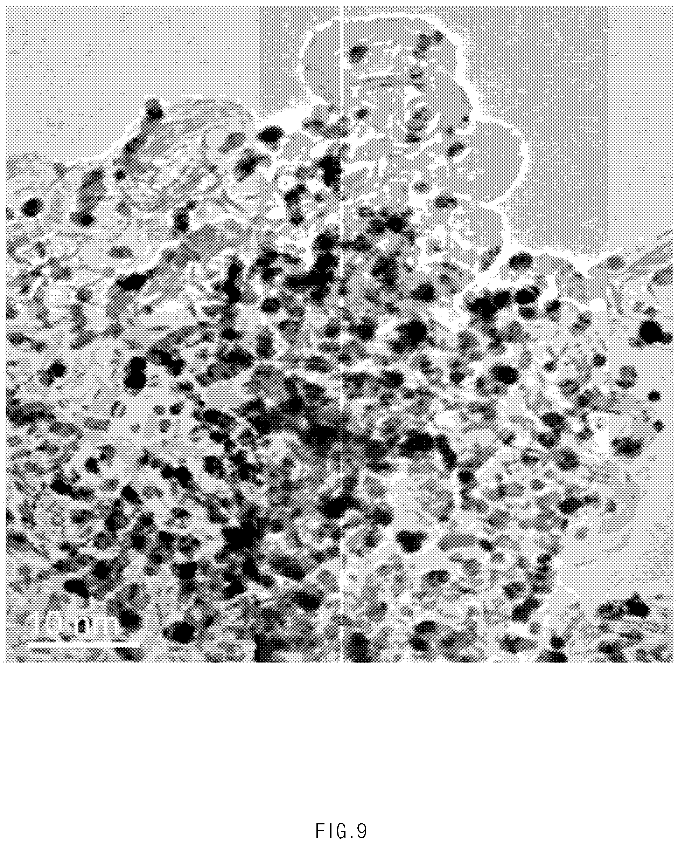

A mixed solution was prepared by mixing the carbon structure, AgNO₃, and polyvinylpyrrolidone in an ethylene glycol solvent, adjusting pH to satisfy a range of 8 to 14 through NaOH pellets, and then stirring for 24 hours. Heating and cooling were repeated by treating the mixed solution, which had been subjected to Ar bubbling with an ultrasonic device, in time units of 10 seconds, 20 seconds, 30 seconds, 1 minute, 2 minutes, and 5 minutes using a continuous wave mode (2.45GHz, 500W) of a microwave reactor (LG Electronics) . Silver ions were reduced through this so that silver nanoparticles were disposed on the carbon structure. Thereafter, filtering and washing were performed using an acetone solution and drying was performed in a vacuum oven at 100°C for 24 hours to obtain dry mixed powder including carbon structure and silver nanoparticles disposed on the carbon structure (see FIG. 9). An amount of the silver nanoparticles loaded was 10 wt%, and an average particle diameter of the silver nanoparticles was 1 nm.

The dry mixed powder and polyvinylidene fluoride were added to N-methyl pyrrolidone (NMP), as a solvent, and stirred to form a negative electrode slurry. In the negative electrode slurry, a weight ratio of the dry mixed powder to the polyvinylidene fluoride was 93:7.

The negative electrode slurry was applied to a stainless steel current collector (thickness: 15 µm), dried in a vacuum oven at 100°C for 12 hours, and then subjected to a rolling process using a roll press to prepare a negative electrode including the stainless steel current collector and a negative electrode active material layer disposed on the stainless steel current collector. A thickness of the negative electrode active material layer was 10 µm, and a loading amount of the negative electrode active material layer was 1 mg/cm².

### (2) Positive Electrode Preparation

Li[Ni_{0.82}Co_{0.14}Mn_{0.04}]O₂ as a positive electrode active material, Li₆PS₆Cl as a solid electrolyte, carbon nanofibers (VGCF, Showa Denko) as a conductive agent, and polytetrafluoroethylene, as a binder, were sequentially added to a container at a weight ratio of 77:20:1:2. A positive electrode mixture was prepared by mixing 10 times for 30 seconds at 10,000 RPM using a lab blender whenever each component was added. High shear mixing was performed on the mixture for 5 minutes by applying a shear force at 100 rpm at 100°C using a twin screw kneader (LG Electronics) to prepare a positive electrode mixture. A free-standing film having a thickness of 200 µm was prepared from the positive electrode mixture by using two roll mil equipment (Inoue Mfg., Inc.) at 100°C. Thereafter, the film was disposed on one side of a primer-coated aluminum current collector (thickness: 20 µm), and the film was bonded to the current collector using a lamination roll maintained at 120°C to prepare a positive electrode.

### (3) Preparation of All-Solid Lithium Secondary Battery

After Li₆PS₆Cl solid electrolyte and nitrile butadiene rubber (NBR) were mixed with xylene as a solvent, the mixture was mixed together with zirconia balls at 2,000 RPM for 1 minute 10 times using a Thinky Mixer to prepare a solid electrolyte slurry. The solid electrolyte slurry was coated on a PET film as a release paper, and dried in a vacuum oven at 45°C for 6 hours to prepare a solid electrolyte layer. In this case, a weight ratio of the Li₆PS₆Cl solid electrolyte to the nitrile butadiene rubber (NBR) was 95:5 in wt%, and a thickness of the prepared solid electrolyte layer was 100 µm.

After an assembly was prepared by disposing the solid electrolyte layer between the negative electrode and the positive electrode, the assembly was put in a pouch and sealed. Thereafter, after the pouch was fixed on an Al plate, the pouch was pressurized at 500 MPa for 30 minutes using an isostatic press (Warm Isostatic Pressure) to prepare an all-solid lithium secondary battery of Example 1.

### Examples 2 to 6: Preparation of All-Solid Lithium Secondary Batteries

All-solid lithium secondary batteries were prepared in the same manner as in Example 1 except that a weight ratio of the carbon structure, AgNO₃, and polyvinylidenepyrrolidone, a pH value, and reaction conditions in the microwave reactor were controlled to adjust amount and average particle diameter of silver nanoparticles as shown in Table 1.

### Comparative Examples 1 and 2: Preparation of All-Solid Lithium Secondary Batteries

### (1) Negative Electrode Preparation

All-solid lithium secondary batteries were prepared in the same manner as in Example 1 except that carbon black (PRINTEX, Orion Engineered Carbons) was used instead of the carbon structure in Example 1, and a weight ratio of the carbon black, AgNO₃, and polyvinylidenepyrrolidone, a pH value, and reaction conditions in the microwave reactor were controlled to adjust amount and average particle diameter of silver nanoparticles as shown in Table 1.

### Comparative Example 3: Preparation of Lithium Secondary Battery

### (1) Negative Electrode and Positive Electrode Preparation

Negative electrode and positive electrode were prepared in the same manner as in Example 1.

### (3) Preparation of Lithium Secondary Battery

Thereafter, after a monocell was prepared by disposing a 15 µm thick polyethylene-based separator between the prepared negative electrode and positive electrode, an electrolyte solution (ethylene carbonate (EC)/ethylmethyl carbonate (EMC)=1/2 (volume ratio), lithium hexafluorophosphate (LiPF₆ 1 mol)) was injected into the monocell to prepare a lithium secondary battery.

### Comparative Example 4: Preparation of Lithium Secondary Battery

A lithium secondary battery was prepared in the same manner as in Comparative Example 3 except that a weight ratio of the carbon structure, AgNO₃, and polyvinylidenepyrrolidone, a pH value, and reaction conditions in the microwave reactor were controlled to adjust amount and average particle diameter of silver nanoparticles as shown in Table 1.

**[Table 1]**

| | Carbon material type | Silver nanoparticles amount (wt%) | Silver nanoparticle size (nm) | Whether or not a solid electrolyte layer was used |
|---|---|---|---|---|
| Example 1 | Carbon structure of Preparation Example 1 | 10 | 1 | ○ |
| Example 2 | Carbon structure of Preparation Example 1 | 5 | 1 | ○ |
| Example 3 | Carbon structure of Preparation Example 1 | 20 | 2.5 | ○ |
| Example 4 | Carbon structure of Preparation Example 1 | 30 | 5 | ○ |
| Example 5 | Carbon structure of Preparation Example 1 | 10 | 10 | ○ |
| Example 6 | Carbon structure of Preparation Example 2 | 10 | 1 | ○ |
| Comparative Example 1 | CB | 10 | 5 | ○ |
| Comparative Example 2 | CB | 10 | 10 | ○ |
| Comparative Example 3 | Carbon structure of Preparation Example 1 | 10 | 1 | X |
| Comparative Example 4 | Carbon structure of Preparation Example 1 | 10 | 10 | X |

**[Table 2]**

| | A thickness of shell in the hollow-type particle(nm) | Average particle diameter of the hollow-type particle(nm) | Carbon structure specific surface area (m²/g) | Oxygen content in the carbon structure (wt%) | I_{D}/I_{G} of the carbon structure |
|---|---|---|---|---|---|
| Carbon structure of Preparation Example 1 | 3 | 12 | 152 | 0.1 | 0.74 |
| Carbon structure of Preparation Example 2 | 7 | 35 | 56 | 0 | 0.41 |

The "specific surface area" was measured by a Brunauer-Emmett-Teller (BET) method, wherein, specifically, the specific surface area was calculated from a nitrogen gas adsorption amount at a liquid nitrogen temperature (77K) using BELSORP-mini II by Bell Japan Inc. The I_{D}/I_{G} (ratio) was measured from a wavelength-peak graph during Raman spectrum measurement. Specifically, after fitting the graph by setting a base line so that a D peak and a G peak may be distinguished, the I_{D}/I_{G} was identified by dividing D peak intensity by G peak intensity (using built-in software, NRS-2000B, Jasco).

The oxygen content of the carbon structure was measured by carbon (C), hydrogen (H), oxygen (O), and nitrogen (N) elemental analysis.

The thickness of the shell may be confirmed through a JEM-2100 instrument by JEOL Ltd.

The average particle diameter of the hollow-type particles corresponds to an average value of particle diameters of top 50 hollow-type particles and particle diameters of bottom 50 hollow-type particles in order of largest particle diameter when the negative electrode active material layer was observed at ×250,000 magnification with a TEM.

The average particle diameter of the silver nanoparticles corresponds to an average value of particle diameters of top 50 silver nanoparticles having a large particle diameter and particle diameters of bottom 50 silver nanoparticles when the carbon structure including the silver nanoparticles of the negative electrode active material layer was observed at ×1,000,000 magnification with a TEM.

The amount of the silver nanoparticles means an amount based on a total weight of the carbon structure and the silver nanoparticles in the negative electrode active material layer.

### Experimental Example 1: Initial Charge/Discharge Efficiency Evaluation

Each of the batteries of the examples and the comparative examples was mounted on a pressure jig, and bolts/nuts located at square corners were tightened with the same pressure of 1N·m to prepare a monocell. When the monocell was charged once and discharged once at 60°C under the following conditions, initial charge/discharge efficiency was evaluated as a ratio of one-time charge capacity to one-time discharge capacity (see Table 3).
Charging conditions: CC charged at 0.1C to 4.25V, thereafter CV charged at 4.25V 0.05C cut-off
Discharging conditions: CC discharged at 0.1C to 3.0 V

### Experimental Example 2: Capacity Retention Evaluation

After charging and discharging each of the batteries of the examples and the comparative examples at 60°C under the following conditions, a capacity retention (%) in a 50^{th}cycle was evaluated. Discharge capacity in the first charge/discharge cycle was set as 100%.
Charging conditions: CC charged at 0.5C to 4.25V, 0.5C cut-off
Discharging conditions: CC discharged at 0.33C to 3.0 V

**[Table 3]**

| | Initial charge and discharge efficiency (%) | 0.5C/0.5C 60°C capacity retention (%, @50 cycle) |
|---|---|---|
| Example 1 | 98.4 | 98.6 |
| Example 2 | 97.8 | 97.3 |
| Example 3 | 96.5 | 96.4 |
| Example 4 | 95.1 | 95.5 |
| Example 5 | 97.3 | 97.7 |
| Example 6 | 97.6 | 97.2 |
| Comparative Example 1 | 71.3 | 85.5 |
| Comparative Example 2 | 63.7 | 82.3 |
| Comparative Example 3 | 94.5 | 73.9 |
| Comparative Example 4 | 95.3 | 74.7 |

## Claims

1. An all-solid lithium secondary battery comprising:
a positive electrode active material layer (200), a negative electrode active material layer (100), and a solid electrolyte layer (300) disposed between the positive electrode active material layer (200) and the negative electrode active material layer (100),
wherein the negative electrode active material layer (100) comprises a carbon structure and silver nanoparticles,
the carbon structure comprises at least one hollow-type particle, and the hollow-type particle comprises a hollow (110) and a carbonaceous shell (120) surrounding the hollow (110),
wherein the hollow-type particle has an average particle diameter of 5 nm to 100 nm, wherein the average particle diameter is measured as disclosed in the specification.

2. The all-solid lithium secondary battery of claim **1,** wherein the silver nanoparticle is disposed on a surface of the carbon structure.

3. The all-solid lithium secondary battery of claim **1,** wherein the shell (120) has a thickness of 1 nm to 15 **nm.**

4. The all-solid lithium secondary battery of claim 1, wherein the carbon structure has a specific surface area of 10 m²/g to 300 m²/g, wherein the specific surface area is measured as disclosed in the specification.

5. The all-solid lithium secondary battery of claim **1,** wherein the carbon structure has a secondary particle shape in which a plurality of hollow-type particles are bonded to each other.

6. The all-solid lithium secondary battery of claim **1,** wherein the carbon structure is included in an amount of 50 wt% to 98 wt% in the negative electrode active material layer (100).

7. The all-solid lithium secondary battery of claim **1,** wherein the silver nanoparticle has an average particle diameter of 1 nm to 100 nm, wherein the average particle diameter is measured as disclosed in the specification.

8. The all-solid lithium secondary battery of claim **1,** wherein, in the negative electrode active material layer (100),
the silver nanoparticles are included in an amount of 1 wt% to 40 wt% based on a total weight of the carbon structure and the silver nanoparticles.

9. The all-solid lithium secondary battery of claim 1, wherein a weight ratio of the carbon structure to the silver nanoparticles is in a range of 99:1 to 60:40.

10. The all-solid lithium secondary battery of claim 1, wherein the negative electrode active material layer (100) further comprises a negative electrode binder.

11. The all-solid lithium secondary battery of claim 1, wherein the negative electrode active material layer (100) has a thickness of 1 µm to 100 µm.

12. The all-solid lithium secondary battery of claim 1, further comprising a negative electrode collector (110), and
a metal layer (120) disposed between the negative electrode active material layer (100) and the negative electrode collector (110) in a charged state,
wherein the metal layer (120) comprises lithium.

13. A method of preparing the all-solid lithium secondary battery of claim 1, the method comprising:
a first step of forming dry mixed powder including a carbon structure and silver nanoparticles disposed on the carbon structure by reducing silver ions in a mixture of the silver ions and the carbon structure; and
a second step of forming a negative electrode active material layer (100) on a negative electrode collector (110) through a negative electrode mixture including the dry mixed powder.

## Patentansprüche

1. Festkörper-Lithium-Sekundärbatterie, umfassend:
eine Positivelektroden-Aktivmaterialschicht (200), eine Negativelektroden-Aktivmaterialschicht (100) und eine Festelektrolytschicht (300), die zwischen der Positivelektroden-Aktivmaterialschicht (200) und der Negativelektroden-Aktivmaterialschicht (100) angeordnet ist,
wobei die Negativelektroden-Aktivmaterialschicht (100) eine Kohlenstoffstruktur und Silbernanopartikel umfasst,
die Kohlenstoffstruktur mindestens ein hohlartiges Partikel umfasst und das hohlartige Partikel einen Hohlraum (110) und eine kohlenstoffhaltige Hülle (120), die den Hohlraum (110) umgibt, umfasst,
wobei das hohlartige Partikel einen durchschnittlichen Partikeldurchmesser von 5 nm bis 100 nm aufweist, wobei der durchschnittliche Partikeldurchmesser wie in der Beschreibung offenbart gemessen wird.

2. Festkörper-Lithium-Sekundärbatterie nach Anspruch 1, wobei das Silbernanopartikel auf einer Oberfläche der Kohlenstoffstruktur angeordnet ist.

3. Festkörper-Lithium-Sekundärbatterie nach Anspruch 1, wobei die Hülle (120) eine Dicke von 1 nm bis 15 nm aufweist.

4. Festkörper-Lithium-Sekundärbatterie nach Anspruch 1, wobei die Kohlenstoffstruktur eine spezifische Oberfläche von 10 m²/g bis 300 m²/g aufweist, wobei die spezifische Oberfläche wie in der Beschreibung offenbart gemessen wird.

5. Festkörper-Lithium-Sekundärbatterie nach Anspruch 1, wobei die Kohlenstoffstruktur eine Sekundärpartikelform aufweist, in der eine Vielzahl von hohlartigen Partikeln aneinander gebunden sind.

6. Festkörper-Lithium-Sekundärbatterie nach Anspruch 1, wobei die Kohlenstoffstruktur in einer Menge von 50 Gew.-% bis 98 Gew.-% in der Negativelektroden-Aktivmaterialschicht (100) enthalten ist.

7. Festkörper-Lithium-Sekundärbatterie nach Anspruch 1, wobei das Silbernanopartikel einen durchschnittlichen Partikeldurchmesser von 1 nm bis 100 nm aufweist, wobei der durchschnittliche Partikeldurchmesser wie in der Beschreibung offenbart gemessen wird.

8. Festkörper-Lithium-Sekundärbatterie nach Anspruch 1, wobei in der Negativelektroden-Aktivmaterialschicht (100)
die Silbernanopartikel in einer Menge von 1 Gew.-% bis 40 Gew.-%, bezogen auf ein Gesamtgewicht der Kohlenstoffstruktur und der Silbernanopartikel, enthalten sind.

9. Festkörper-Lithium-Sekundärbatterie nach Anspruch 1, wobei ein Gewichtsverhältnis der Kohlenstoffstruktur zu den Silbernanopartikeln in einem Bereich von 99:1 bis 60:40 liegt.

10. Festkörper-Lithium-Sekundärbatterie nach Anspruch 1, wobei die Negativelektroden-Aktivmaterialschicht (100) ferner ein Negativelektrodenbindemittel umfasst.

11. Festkörper-Lithium-Sekundärbatterie nach Anspruch 1, wobei die Negativelektroden-Aktivmaterialschicht (100) eine Dicke von 1 µm bis 100 µm aufweist.

12. Festkörper-Lithium-Sekundärbatterie nach Anspruch 1, ferner umfassend einen Negativelektrodenkollektor (110), und
eine Metallschicht (120), die zwischen der Negativelektroden-Aktivmaterialschicht (100) und dem Negativelektrodenkollektor (110) in einem geladenen Zustand angeordnet ist,
wobei die Metallschicht (120) Lithium umfasst.

13. Verfahren zum Herstellen der Festkörper-Lithium-Sekundärbatterie nach Anspruch 1, wobei das Verfahren umfasst:
einen ersten Schritt des Bildens von trockenem Mischpulver, das eine Kohlenstoffstruktur und Silbernanopartikel, die auf der Kohlenstoffstruktur angeordnet sind, enthält, durch Reduzieren von Silberionen in einer Mischung der Silberionen und der Kohlenstoffstruktur; und
einen zweiten Schritt des Bildens einer Negativelektroden-Aktivmaterialschicht (100) auf einem Negativelektrodenkollektor (110) durch eine Negativelektrodenmischung, die das trockene Mischpulver enthält.

## Revendications

1. Batterie secondaire au lithium à l'état solide comprenant :
une couche de matière active d'électrode positive (200), une couche de matière active d'électrode négative (100), et une couche d'électrolyte solide (300) disposée entre la couche de matière active d'électrode positive (200) et la couche de matière active d'électrode négative (100),
la couche de matière active d'électrode négative (100) comprenant une structure de carbone et des nanoparticules d'argent,
la structure de carbone comprenant au moins une particule du type creux, et la particule du type creux comprenant un creux (110) et une coque carbonée (120) entourant le creux (110),
la particule du type creux présentant un diamètre particulaire moyen de 5 nm à 100 nm, le diamètre particulaire moyen étant mesuré de la façon divulguée dans la spécification.

2. Batterie secondaire au lithium à l'état solide selon la revendication 1, la nanoparticule d'argent étant disposée sur une surface de la structure de carbone.

3. Batterie secondaire au lithium à l'état solide selon la revendication 1, la coque (120) mesurant de 1 nm à 15 nm d'épaisseur.

4. Batterie secondaire au lithium à l'état solide selon la revendication 1, la superficie spécifique de la structure de carbone mesurant de 10 m²/g à 300 m²/g, la superficie spécifique étant mesurée de la façon divulguée dans la spécification.

5. Batterie secondaire au lithium à l'état solide selon la revendication 1, la structure de carbone présentant une forme particulaire secondaire dans laquelle une pluralité de particules du type creux sont liées l'une à l'autre.

6. Batterie secondaire au lithium à l'état solide selon la revendication 1, la structure de carbone étant comprise dans la proportion de 50% en poids à 98% en poids dans la couche de matière active d'électrode négative (100).

7. Batterie secondaire au lithium à l'état solide selon la revendication 1, la nanoparticule d'argent présente un diamètre particulaire moyen mesurant de 1 nm à 100 nm, le diamètre particulaire moyen étant mesuré de la façon divulguée dans la spécification.

8. Batterie secondaire au lithium à l'état solide selon la revendication 1, dans laquelle, dans la couche de matière active d'électrode négative (100),
les nanoparticules d'argent sont comprises dans la proportion de 1% en poids à 40% en poids sur la base d'un poids total de la structure de carbone et des nanoparticules d'argent.

9. Batterie secondaire au lithium à l'état solide selon la revendication 1, comportant un rapport pondéral de la structure de carbone sur les nanoparticules d'argent dans une plage allant de 99/1 à 60/40.

10. Batterie secondaire au lithium à l'état solide selon la revendication 1, la couche de matière active d'électrode négative (100) comprenant en outre un liant d'électrode négative.

11. Batterie secondaire au lithium à l'état solide selon la revendication 1, l'épaisseur de la couche de matière active d'électrode négative (100) étant comprise dans la plage allant de 1 µm à 100 µm.

12. Batterie secondaire au lithium à l'état solide selon la revendication 1, comprenant en outre un collecteur d'électrode négative (110), et
une couche de métal (120) disposée entre la couche de matière active d'électrode négative (100) et le collecteur d'électrode négative (110) à l'état chargé,
la couche de métal (120) comprenant du lithium.

13. Procédé de préparation de la batterie secondaire au lithium à l'état solide selon la revendication 1, le procédé comprenant :
une première étape de formation d'une poudre mixte sèche comprenant une structure de carbone et des nanoparticules d'argent disposées sur la structure de carbone en réduisant des ions d'argent dans un mélange des ions d'argent et de la structure de carbone ; et
une deuxième étape de formation d'une couche de matière active d'électrode négative (100) sur un collecteur d'électrode négative (110) à travers un mélange d'électrode négative comprenant la poudre mixte sèche.
